# EUROPEAN PATENT APPLICATION

(11) **EP 3 399 503 A1**
(43) Date of publication of application: **07.11.2018**
(21) Application number: 17193953.1
(22) Date of filing: 29.09.2017
(51) Int. Cl.: G07B 15/00, G07C 9/00, G06Q 30/06, G07F 17/00

(54) **ARTICLE USE CONTROL METHOD, DEVICE AND SYSTEM, ARTICLE AND SERVER**

(30) Priority: 05.05.2017 CN 201710313328
(71) Applicant: Beijing Mobike Technology Co., Ltd., 100191 Haidan District, Beijing (CN)
(72) Inventor: HU, Weiwei, Beijing, Beijing 100191 (CN); JIN, Hongdu, Beijing, Beijing 100191 (CN)
(74) Representative: Cabinet Bleger-Rhein-Poupon

(57) **Abstract**

Disclosed are an article use control method, device and system and an article. The article use control method includes: providing an article in an available state, the article having a unique article identifier; when detecting an event that the article is used by a user, starting up a timer to count down to wait for an article use authentication result based on the article identifier and a user identifier of the user who uses the article, the user identifier uniquely identifying the user; and when the article use authentication result is not acquired or the authentication is failed before the countdown ends, changing the article from the available state to a disabled state. According to the present invention, a user can use an article before performing an authentication operation. Moreover, during the use of the article by the user, article use authentication is completed in a user-unperceivable manner. The user experience is improved.

## Description

### CROSS-REFERENCE TO RELATED APPLICATIONS

This application claims priority to Chinese Patent Application No. 201710313328.2, filed on May 05, 2017, which is hereby incorporated by reference in its entirety.

### FIELD OF THE INVENTION

The present invention relates to the technical field of article management, and in particular to an article use control method, device and system, an article and a server.

### BACKGROUND OF THE INVENTION

With the rapid development of Internet technologies and device manufacture technologies, an article sharing service which temporarily transfers the right-to-use of an article to a user emerges through the Internet technologies. An idle article may be provided to the user in a time-sharing or stage-sharing manner, so that user can use the article with relatively low costs, which can effectively make use of article resources, avoid article waste and provide environmentally friendly article use services. For example, shared bicycles, shared automobiles and shared chargers emerging in recent years all belong to such article sharing services.

However, in the current article sharing services, usually an article not in use is set to be in a disabled state, and the article is changed from the disabled state to an available state only after a user performs an authentication operation and passes authentication, affecting the user experience. For example, in the shared bicycle service, a bicycle for sharing is usually locked, and the bicycle can only be unlocked after a user operates an application which provides the shared bicycle service, and inputs the identifier of the bicycle by means of code scanning, manual input and so on to perform use authentication. Sometimes the bicycle has to be unlocked by acquiring a password and manually inputting the same. The process of use authentication requires a lot of operations, which is very cumbersome. Especially, when the user needs to use a bicycle in time-pressing situations such as going to work and getting off work, rushing to appointments and so on, unlocking the bicycle after use authentication will delay a lot of time, which greatly prevents the smooth use by the user, affecting the user experience.

Thus, the inventors have found that it is necessary to improve the problems in the above prior art.

### SUMMARY OF THE INVENTION

An object of the present invention is to provide a new technical solution for article use control.

According to a first aspect of the present invention, an article use control method is provided, comprising: providing an article in an available state, the article having a unique article identifier; when detecting an event that the article is used by a user, starting up a timer to count down to wait for an article use authentication result based on the article identifier and a user identifier of the user who uses the article, the user identifier uniquely identifying the user; and when the article use authentication result is not acquired or the authentication is failed before the countdown ends, changing the article from the available state to a disabled state.

Alternatively, the article use control method further comprises: each time the article use authentication result is not acquired or the authentication is failed before the countdown ends, restarting up the timer to count down until the number of times the timer is started up reaches a predetermined threshold and the article use authentication result is still not acquired or the authentication is still failed before the last countdown ends, changing the article from the available state to the disabled state.

Alternatively, the event representing that the article is used by the user includes at least one of the following situations: the article vibrates, the pressure loaded on a part of the article changes, the temperature of the article changes and the article emits an in-use signal.

Alternatively, the method further includes: determining the user identifier corresponding to the user who uses the article corresponding to the article identifier; generating an article use authentication request including the article identifier and the user identifier; and sending the article use authentication request to a server to trigger the server to authenticate whether the user has a right to use the article according to the user identifier and the article identifier included in the article use authentication request and returning a corresponding article use authentication result.

Alternatively, the step of determining the user identifier corresponding to the user who uses the article corresponding to the article identifier comprises: acquiring the article identifier shown on the article by a user equipment used by the user; and determining a user identifier of the user equipment which acquires the article identifier as the user identifier corresponding to the user who uses the article corresponding to the article identifier; or, providing the article identifier by the article by means of short range communication; acquiring the article identifier by a user equipment used by the user by means of short range communication; and determining a user identifier of the user equipment which acquires the article identifier as the user identifier corresponding to the user who uses the article corresponding to the article identifier; or, providing the user identifier by a user equipment used by the user by means of short range communication; acquiring the user identifier by the article by means of short range communication; and determining the user identifier acquired by the article as the user identifier corresponding to the user who uses the article corresponding to the article identifier.

Alternatively, the method further includes: acquiring a biometric feature of the user who uses the article, forming an article use authentication request with the encoded biometric feature of the user and the article identifier of the article and sending same to the server; and identifying the user identifier by the server according to the received encoded biometric feature of the user, authenticating by the server whether the user corresponding to the user identifier has a right to use the article and returning by the server a corresponding article use authentication result.

Alternatively, the article use authentication result includes authentication success and authentication failure, the authentication failure including a case that the user is a non-registered user, the account corresponding to the user has insufficient balance, the account corresponding to the user is overdue, or the account corresponding to the user does not pay a deposit.

Alternatively, the article use control method also includes: when an event representing that the use of the article is finished occurs, ending the use for the user and performing charging.

Alternatively, the event representing that the use of the article is finished includes: a message that the use of the article is finished is issued, the article has stopped vibration for a predetermined period of time, the pressure loaded on a part of the article has disappeared for a predetermined period of time, or a part of the article has stopped rotating for a predetermined period of time, the article enters a predetermined region or an article use authentication request is received from another user.

Alternatively, the article use control method also includes: when a predetermined event occurs, setting the article in the disabled state to the available state.

Alternatively, the predetermined event includes a case that: the article has stopped vibration for a predetermined period of time, the pressure loaded on a part of the article has disappeared for a predetermined period of time, or a part of the article has stopped rotating for a predetermined period of time.

According to a second aspect of the present invention, an article use control method implemented on the article side is provided, comprising: setting an article to be in an available state, the article having a unique article identifier; when detecting an event that the article is used by a user, starting up a timer to count down to wait for an article use authentication result based on the article identifier and a user identifier of the user; wherein the article use authentication result is obtained by performing article use authentication based on the article identifier and the user identifier of the user who uses the article corresponding to the article identifier, the user identifier uniquely identifying the user; and when the article use authentication result is not acquired or the authentication is failed before the countdown ends, setting the article to change from the available state to a disabled state.

Alternatively, the article use control method also includes: each time the article use authentication result is not acquired or the authentication is failed before the countdown ends, restarting up the timer to count down until the number of times the timer is started up reaches a predetermined threshold and the article use authentication result is still not acquired or the authentication is still failed before the last countdown ends, setting the article from the available state to the disabled state.

Alternatively, the article use control method also includes: providing the article identifier by means of short range communication or showing the article identifier on the article so that the user equipment acquires the article identifier, and determining a user identifier of the user equipment which acquires the article identifier as the user identifier corresponding to the user who uses the article corresponding to the article identifier, so as to trigger the article use authentication request including the article identifier and the user identifier.

Alternatively, the method further includes: acquiring the user identifier provided by the user equipment by means of short range communication; determining the user identifier acquired by the article as the user identifier corresponding to the user who uses the article corresponding to the article identifier; generating an article use authentication request including the article identifier and the user identifier; and sending the article use authentication request to a server to trigger the server to authenticate whether the user has a right to use the article according to the user identifier and the article identifier included in the article use authentication request.

Alternatively, the article use control method also includes: acquiring a biometric feature input by the user who uses the article; encoding the biometric feature of the user; and sending an article use authentication request formed with the encoded biometric feature of the user and the article identifier to a server so that the server identifies the user identifier according to the received encoded biometric feature of the user and authenticates whether the user corresponding to the user identifier has a right to use the article.

Alternatively, the event representing that the article is used by the user includes at least one of the following situations: the article vibrates, the pressure loaded on a part of the article changes, the temperature of the article changes and the article emits an in-use signal.

Alternatively, the article is a vehicle, and the step of setting the article from the available state to the disabled state includes: issuing a signal to control a lock component of the vehicle to contact a wheel of the vehicle so that the vehicle is disabled by means of friction; or issuing a signal to control a front shaft, a middle shaft or a rear shaft of the vehicle to lock; or issuing a signal to control the vehicle to issue an alarm sound or an interference sound, light up an alarm light or prompt an alarm text; or issuing a signal to control a pawl of a rear wheel of the vehicle to be disengaged from a ratchet wheel; or issuing a signal to control a handlebar of the vehicle to be not rotatable.

Alternatively, the step of setting the article from the available state to the disabled state includes: issuing a control to control the article as an electric product to power down; or issuing a signal to control the article to issue an alarm sound or an interference sound, light up an alarm light or prompt an alarm text.

According to a third aspect of the present invention, an article use control method implemented on the server side is provided, comprising: receiving an article use authentication request from a user or an article, the article use authentication request including an article identifier and a user identifier corresponding to the user who uses the article corresponding to the article identifier, wherein the article identifier uniquely identifies the article, and the user identifier uniquely identifies the user; and authenticating whether the user has a right to use the article according to the user identifier and the article identifier and returning a corresponding article use authentication result to the user and/or article.

According to a fourth aspect of the present invention, an article use control method implemented on the user equipment side is provided, comprising: acquiring and determining an article identifier corresponding to an article used by a user to trigger the acquisition of an article use authentication result, wherein the article identifier uniquely identifies the article, the article use authentication result is obtained by performing article use authentication based on the article identifier and the user identifier of the user who uses the article corresponding to the article identifier, and the user identifier uniquely identifies the user.

Alternatively, the step of acquiring and determining the article identifier corresponding to the article used by the user includes: acquiring the article identifier provided by the article by means of short range communication or acquiring the article identifier shown on the article, and determining the acquired article identifier as the article identifier corresponding to the article used by the user; generating an article use authentication request including the article identifier and the user identifier; and sending the article use authentication request to a server to trigger the server to authenticate whether the user has a right to use the article according to the user identifier and the article identifier included in the article use authentication request.

According to a fifth aspect of the present invention, an article use control device provided on the article side is provided, comprising: a communication device for implementing communication; a memory for storing instructions; a processor for being controlled by the instructions stored in the memory to operate to implement the article use control method in the second aspect.

According to a sixth aspect of the present invention, an article use control device provided on the article side is provided, comprising: an acquisition unit for acquiring a biometric feature of the user; an encoding unit for encoding the biometric feature; a communication device for implementing communication; a memory for storing instructions; a processor for being controlled by the instructions stored in the memory to operate to implement the article use control method in the second aspect.

According to a seventh aspect of the present invention, an article is provided, comprising: an article use control device in any of the fifth or sixth aspect.

Alternatively, the article is a vehicle, and the article use control device is an on-board electronic device.

According to an eighth aspect of the present invention, a user equipment is provided, comprising: a communication device for implementing communication; a memory for storing instructions; a processor for being controlled by the instructions stored in the memory to operate to implement the article use control method in the fourth aspect.

Alternatively, the user equipment is a mobile phone or a wearable electronic device.

According to a ninth aspect of the present invention, a server is provided, comprising: a memory for storing instructions; a processor for being controlled by the instructions stored in the memory to operate to implement the article use control method in the third aspect.

According to a tenth aspect of the present invention, an article use control system is provided, comprising: an article according to the seventh aspect; a user equipment according to the eighth aspect; and a server according to the ninth aspect.

Other features and advantages of the present invention will become apparent from the following detailed description of exemplary embodiments of the present invention with reference to the accompanying drawings.

### BRIEF DESCRIPTION OF THE DRAWINGS

The accompanying drawings incorporated in the description and forming a part thereof illustrate the embodiments of the present invention and are used to explain the principle of the present invention along therewith.
Fig. 1 shows a flowchart of an article use control method according to a first embodiment of the present invention.
Fig. 2 shows a flowchart of an article use control method according to a second embodiment of the present invention.
Fig. 3 shows a schematic diagram of an article use control device according to the second embodiment of the present invention.
Fig. 4 shows a schematic diagram of another article use control device according to the second embodiment of the present invention.
Fig. 5 shows a schematic diagram of an article according to the second embodiment of the present invention.
Fig. 6 shows a flowchart of an article use control method according to a third embodiment of the present invention.
Fig. 7 shows a schematic diagram of a server according to the third embodiment of the present invention.
Fig. 8 shows a flowchart of an article use control method according to a fourth embodiment of the present invention.
Fig. 9 shows a schematic diagram of a user equipment according to the fourth embodiment of the present invention.
Fig. 10 shows a schematic diagram of an article use control system according to a fifth embodiment of the present invention.

### DETAILED DESCRIPTION OF THE EMBODIMENTS

Various exemplary embodiments of the present invention will be described in detail with reference to the accompanying drawings. It should be noted that unless stated specifically otherwise, the relative arrangement of the components and steps illustrated in these embodiments, the numeral expressions and the values do not limit the scope of the present invention.

The description of at least one exemplary embodiment of the present invention is actually merely illustrative rather than limiting the present invention and the application or use thereof.

Technologies, methods and devices known to those skilled in the art may not be described in detail but these technologies, methods and devices shall be regarded as a part of the description when appropriate.

Any particular value in all examples illustrated and described here shall be construed as merely illustrative rather than limiting. Thus, other examples of the exemplary embodiments may have different values.

It should be noted that similar signs and letters represent similar items in the following figures, and thus, once a certain item is defined in a figure, there is no need to further describe the same in the following figures.

### <Overall architecture of article use control system>

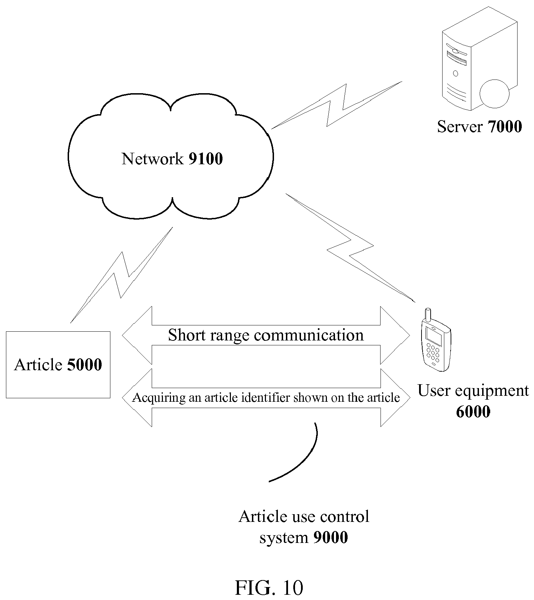

Fig. 10 shows a schematic diagram of an article use control system 9000 which can implement the embodiments of the present invention.

The article use control system 9000 includes an article 5000, a user equipment 6000 and a server 7000.

The article 5000 communicates with the user equipment 6000 by means of short range communication. The article 5000 communicates with the server 7000 and the user equipment 6000 communicates with the server 7000 through a network 9100 respectively. The network 9100 may be a wireless or wired communication network.

The article 5000 at least includes an article use control device 3000 or an article use control device 4000.

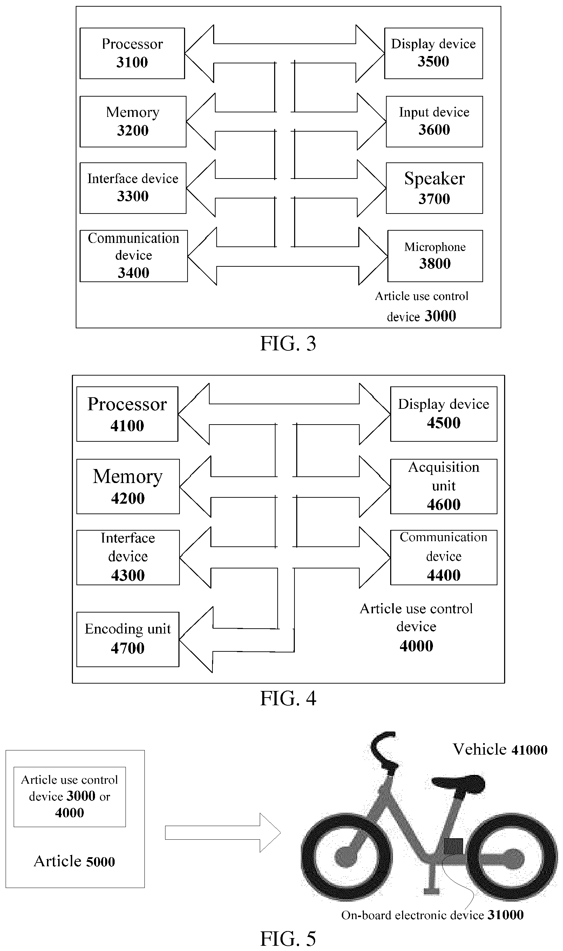

The article use control device 3000 may be as shown in Fig. 3 and includes a processor 3100, a memory 3200, an interface device 3200, a communication device 3400, a display device 3500, an input device 3600, a speaker 3700, a microphone 3800, etc.

The article use control device 4000 may be as shown in Fig. 4 and includes a processor 4100, a memory 4200, an interface device 4300, a communication device 4400, a display device 4500, an acquisition unit 4600, an encoding unit 4700, etc.

In particular, the article may be a vehicle 41000 as shown in Fig. 5. The article use control device 3000 or 4000 may be an on-board electronic device 31000. It should be understood that the vehicle shown in Fig. 5 is merely illustrative and the vehicle 41000 is not limited to a bicycle but may also be a moped, an electric bicycle or an electric automobile, an automobile, etc. The location of the on-board electronic device 31000 on the vehicle 41000 is also merely illustrative without limitation.

The user equipment 6000 may be a smart terminal such as a mobile phone, a palm computer, a tablet computer, etc. or a wearable smart device such as a smart watch, a smart loop, a smart jewelry, etc.

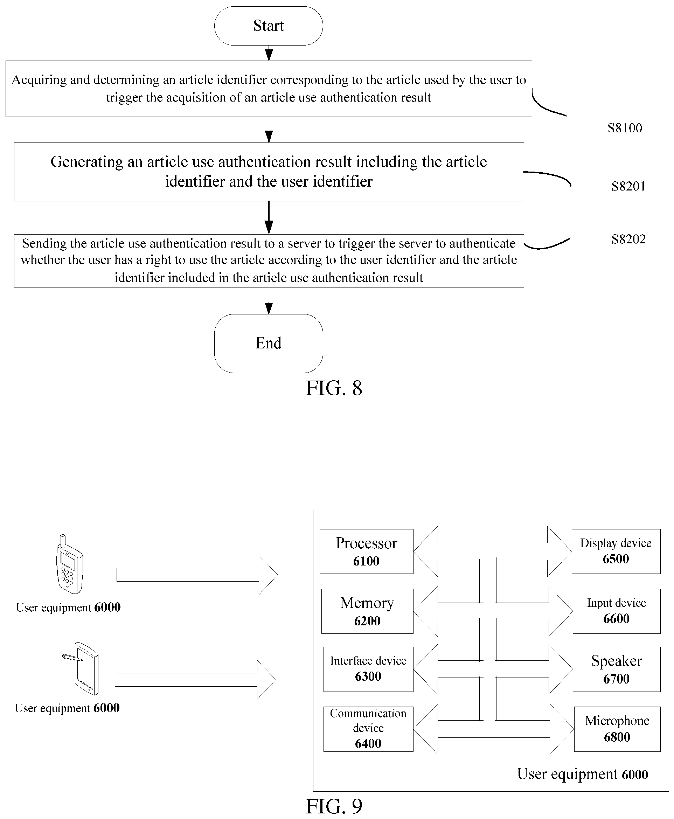

In an example, the user equipment 6000 may be as shown in Fig. 9 and may include a processor 6100, a memory 6200, an interface device 6300, a communication device 6400, a display device 6500, an input device 6600, a speaker 6700, a microphone 6800, etc.

The server 7000 may be for example a blade server, a computer or a computer group consisting of a plurality of computers and may also be a cloud server.

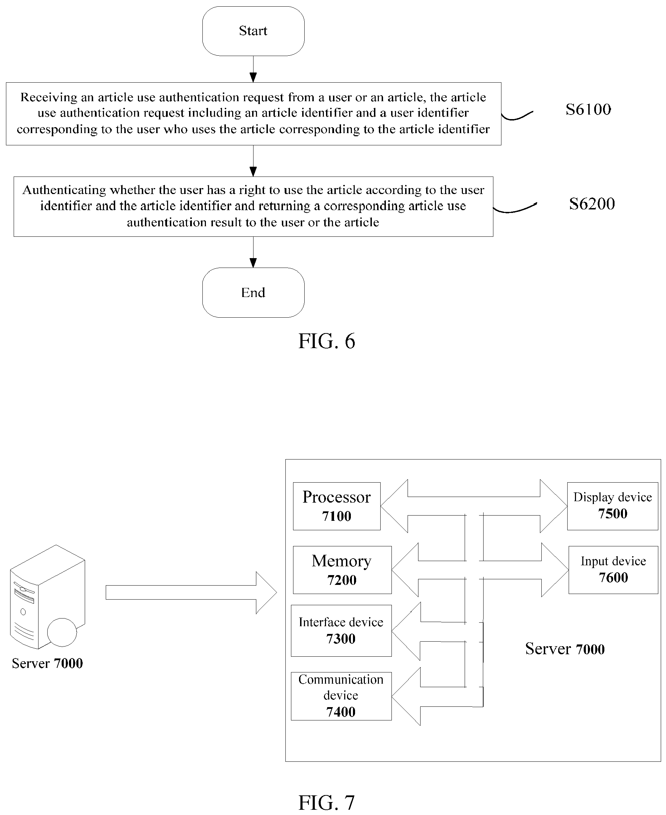

In an example, the server 7000 may be as shown in Fig. 7 and may include a processor 7100, a memory 7200, an interface device 7300, a communication device 7400, a display device 7500, an input device 7600, etc. Although the server may also include a speaker, a microphone, etc., these components are irrelevant to the present invention and thus are omitted here.

### <First embodiment

The general concept of this embodiment is to provide a technical solution of article use control. An article in an available state is provided. Article use authentication is performed on a user who uses the article only when the article is actually in use or when the user requires. For example, active trigger with user participation or passive trigger without user participation may be employed. The article is changed from the available state to a disabled state when an article use authentication result is not acquired or the authentication is failed. Thus, the user can use the article before performing an authentication operation or without waiting for an article use authentication result. Moreover, the user can directly use the article after triggering authentication without waiting for the authentication result. The use of the article by the user is not affected during authentication. The user does not need direct participation during passive triggering authentication. Furthermore, after the normal riding is ended, the user can leave voluntarily after normal stopping without any redundant operations. Thus, the ending of the riding is perceived automatically and the charging is ended, saving the user's time and improving user experience.

Also, when providing an article in an available state, a non-registered user may also use the article. If the user never performs authentication, the article can change from the available state to a disabled state, thus preventing the non-registered user using the article with indefinite duration.

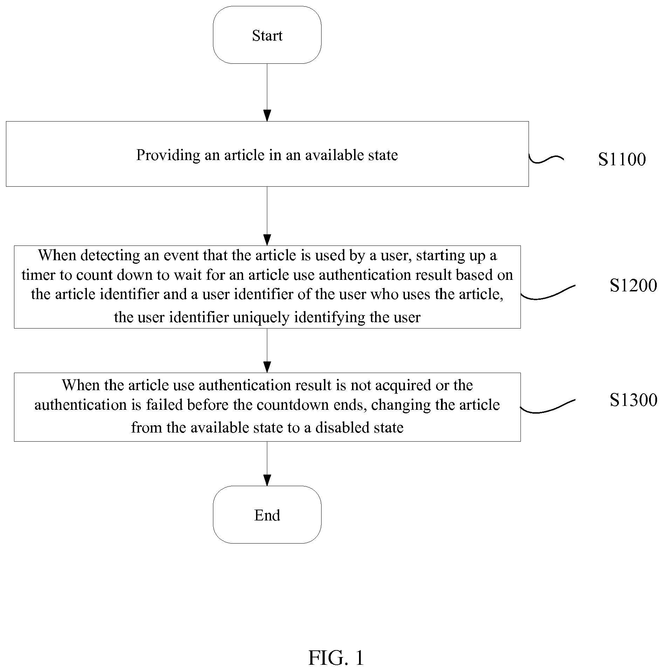

The article use control method provided in this embodiment is shown in Fig. 1 and includes the following steps.

In step S1100, an article in an available state is provided, wherein the article has a unique article identifier.

In this embodiment, the article may be any article the right-to-use of which can be transferred to and used by a user in a time division or segmentation manner. For example, the article may be a bicycle, an electric vehicle, a moped, an automobile or a charging device, etc.

The article has a unique article identifier which can be an article serial number, sequence number, character string, article code or other article identification information or the like for uniquely identifying the article.

Alternatively, the article identifier may be shown on the article. For example, the article serial number, sequence number, character string, article code, article barcode and other article identifiers may be shown at a location on the article which can be easily found by the user.

Alternatively, a short range communication device, a storage area and a control unit may also be provided in the article. The storage area stores a corresponding article identifier. The article identifier is read from the storage area under the control of the control unit. The article identifier is sent by means of short range communication so that a user equipment may acquire the article identifier. For example, the article identifier is broadcast through Bluetooth so that the user equipment may receive the article identifier through monitoring. Or, an NFC (Near Field Communication) label carrying the article identifier may be provided on the article so that the user equipment may read the article identifier within the communication range of the NFC label.

In step S1100, providing an article in an available state is to provide an article which can be directly used by a user, for example, providing a vehicle which has already been unlocked or has no lock and can be directly ridden or driven by the user such as a bicycle, an electric vehicle, a moped or an automobile or the like, or providing a charging device which can be directly used by the user and output electricity for charging.

In step S1200, when detecting an event that the article is used by a user, a timer is started up to count down to wait for an article use authentication result based on the article identifier and a user identifier of the user who uses the article. The user identifier uniquely identifies the user.

In step S1200, the event representing that the article is used by the user includes at least one of the following situations: the article vibrates, the pressure loaded on a part of the article changes, the temperature of the article changes and the article emits an in-use signal.

For example, when the article is a vehicle such as a bicycle and so on, during the actual use of the bicycle by the user, the bicycle may vibrate, the pressure carried and sensed by the seat of the bicycle may change, the human temperature sensed by the seat of the bicycle may change, or the bicycle issues a signal of lighting up, buzzing and so on. At least one of these events may be an event representing that the vehicle is currently used by the user.

As another example, when the article is a charging device, during the actual use of the bicycle by the user, the temperature of the charging device may change due to electricity output, the charging device may issue a signal that the charging interface outputs electricity or a signal representing the charging device is in use such as the indicating light in an operating state lights up. At least one of these events may be an event representing that the charging device is currently used by the user.

The above event representing that the article is used by the user may also have corresponding in-use events for different articles, which can be defined in particular according to the article actually used by the user and will not be elaborated here.

When detecting an event that the article is used by a user, a timer is started up to count down. Here, when the timer is started up to count down at the article, the article may also notify the user equipment at the user side which uses the article to start up the timer to count down, and the article may also notify a server which performs use authentication on the article to start up the timer to count down.

Alternatively, the timer is started up to count down at the article so that if an abnormal situation occurs, for example, the article cannot be connected to the user equipment corresponding to the user who uses this article, the server for article use authentication cannot be connected, the user equipment corresponding to the user who uses this article has an abnormal condition and cannot perform communications, or the user who uses this article is an illegal user who has no right to use this article, and thus the article use authentication cannot be triggered actually, the article may change from the available state to the disabled state by means of step S1300 if no article use authentication result is acquired before the countdown is ended.

In addition, the countdown duration may be set according to engineering experience and experiment simulation.

The user identifier uniquely identifies the user which can be a user serial number, identification code, user feature information such as facial data, vocal print data, fingerprint data, iris data or the like which is unique to the user.

Alternatively, the user identifier may be allocated to the user by a server which performs registration during the registration of the user and issued to corresponding user equipment for storage therein. Before acquiring the article use authentication result, the user equipment may be controlled by an application which runs thereon and provides an article use service, acquire its own user identifier and acquire an article identifier of an article used by a corresponding user by means of short range communication for generating an article use authentication request to be sent to the server to acquire a corresponding article use authentication result.

In step S1300, when the article use authentication result is not acquired or the authentication is failed before the countdown ends, the article is set to change from the available state to a disabled state.

Exemplarily, when the article use authentication result is not acquired before the countdown is ended or the authentication is failed, changing the article from the available state to the disabled state may include: the situation where the article use authentication result is not acquired before the countdown is ended or the authentication is failed before the countdown is ended; or the situation where the authentication is failed or the article use authentication result is not acquired before the countdown is ended.

The disabled state may include a blocked use state and an interfered use state.

The blocked use state is a state where the use function of the article is lost. For example, when the article is a riding vehicle such as a bicycle, a moped, an electric vehicle and so on, the user may be prevented from riding by preventing the wheel from rotating by means of locking of the front shaft/middle shaft/rear shaft of the vehicle and/or preventing the vehicle steering by means of blocking the rotation of the vehicle handlebar. In addition, the locking of the front shaft/middle shaft/rear shaft may be preferred, so that the user's safety will not be affected. As another example, when the article is a driving vehicle such as an automobile, an electric automobile and so on, the user may be prevented from continuing driving by means of shut down, braking, gear shift and so on. In addition, slow braking, automatic gear shift and so on may be preferred so that the vehicle will stop slowly without incurring any danger. As another example, when the article is a charging device, the user may be prevented from using the charging device by closing electricity output.

The interfered use state does not make the use function of the article lost, but it is a state where the user is interfered to use the article normally by various means. For example, the user is interfered by issuing an alarm sound and an interference sound and displaying an alarm light and alarm text and so on.

Exemplarily, the duration and sound intensity of the alarm sound and interference sound are not limited in the embodiments of the present invention. The duration for displaying the alarm light and the alarm text is not limited and may be selected and configured by those skilled in the art according to the actual needs.

Exemplarily, the article use authentication result includes authentication success and authentication failure. The authentication failure may include that the user is a non-registered user, the account corresponding to the user has insufficient balance, the account corresponding to the user is overdue, or the account corresponding to the user does not pay a deposit.

Exemplarily, the article use authentication result being not acquired before the countdown is ended includes: the user who uses this article never performs article use authentication, that is, this user does not actively trigger authentication and does not carry a user equipment for identifying the user of this article, and thus the user identifier of this user cannot be acquired to perform article use authentication; or, due to communication failure, the server does not receive an article use authentication request including the article identifier and the user identifier corresponding to the user who uses this article and thus cannot perform article use authentication; or, due to communication failure, the article end never receives the article use authentication result, that is, the article cannot be connected to the user equipment corresponding to the user who uses this article, or the server for article use authentication cannot be connected, or the user equipment corresponding to the user who uses this article has an abnormal condition and cannot perform communication, or the user who uses this article is an illegal user who has no right to use this article and so on, and thus no actual trigger can be performed to acquire the article use authentication result, at this moment, the article end changes the article from the available state to the disabled state when the countdown is ended.

In an example, the method may further include the following steps.

In step S1400, the user identifier corresponding to the user who uses the article corresponding to the article identifier is determined.

In step S1500, an article use authentication request including the article identifier and the user identifier is generated.

In step S1600, the article use authentication request is sent to a server to trigger the server to authenticate whether the user has a right to use the article according to the user identifier and the article identifier included in the article use authentication request and a corresponding article use authentication result is returned.

In step S1600, the article use authentication request may be sent by the user equipment or the article side to trigger the server for performing article use authentication to receive the request and perform corresponding article use authentication to authenticate whether the user has a right to use this article, and after obtaining an article use authentication result, the server may send the article use authentication result to a corresponding article and/or user equipment, and finally, the article is maintained in the available state or changed from the available state to the disabled state according to the corresponding article use authentication result.

Authenticating the article identifier and the user identifier corresponding to the user who uses the article corresponding to the article identifier to authenticate whether the user has a right to use this article is authenticated may include authenticating whether this user is a registered user, whether the user has topped up, whether the user is overdue, whether the user has paid the article deposit, whether the user has bound a payment service and so on, and checking whether the article meets the condition for continuous use at the same time of authentication, for example, whether the electricity is sufficient, whether the article is complete and so on.

When it is authenticated that the user has no right to use this article, authentication failure may be returned so that the article may change from the available state to the disabled state. Instead, if the user has a right to use this article, authentication success will be returned so that the article may be maintained in the available state and the user may continuously use this article.

Exemplarily, in step S1400, the step of determining the user identifier corresponding to the user who uses the article corresponding to the article identifier may include the following steps.

In step S1411, the article identifier shown on the article is acquired by a user equipment used by the user.

In step S1412, a user identifier of the user equipment which acquires the article identifier is determined as the user identifier corresponding to the user who uses the article corresponding to the article identifier.

For example, the article identifier may be fixed on the article in a label form. For example, an article identifier including a QR code and a serial number is shown on the article. The user equipment may directly identify the QR code to acquire the article identifier, or the user may input the article identifier such as the serial number shown on the article to the user equipment.

Exemplarily, in step S1400, the step of determining the user identifier corresponding to the user who uses the article corresponding to the article identifier may include the following steps.

In step S1421, the article identifier is provided by the article by means of short range communication.

In step S1422, the article identifier is acquired by the user equipment used by the user by means of short range communication.

Step 1423, a user identifier of the user equipment which acquires the article identifier is determined as the user identifier corresponding to the user who uses the article corresponding to the article identifier.

The short range communication may be Bluetooth communication, NFC (Near Field Communication) communication, ZigBee communication, WiFi communication, UWM (Ultra Wideband) communication, infrared communication, sound wave communication and so on.

In addition, the article providing the article identifier by means of short range communication may be implemented when an event representing that the article is currently used by a user occurs to the article and may also be implemented continuously after an article in an available state is provided. During particular application, in order to reduce the electricity consumption caused by short range communication, preferably, it is implemented when an event representing that the article is currently used by a user occurs to the article.

In addition, the user equipment used by the user providing the user identifier by means of short range communication may be implemented when the user is going to use this article and may also be implemented continuously. During particular application, in order to reduce the electricity consumption caused by short range communication, preferably, it is implemented when the user is going to use this article.

In an example, the short range communication is Bluetooth communication.

Accordingly, in step S1421, providing the article identifier by the article by means of short range communication may include sending the article identifier by means of Bluetooth broadcast.

Accordingly, in step S1422, acquiring the article identifier by a user equipment used by the user by means of short range communication may include monitoring Bluetooth broadcast to receive the article identifier.

In an example, the short range communication is NFC.

Accordingly, in step S1421, providing the article identifier by the article by means of short range communication may include sending the article identifier by means of NFC.

Accordingly, the user equipment may acquire the article identifier and send an article use authentication request. The user equipment acquiring the article identifier may include: the user equipment approximates or adheres to the article to perform short range communication with the article so as to acquire the article identifier and determine the user identifier of the user equipment which acquires the article identifier as the user identifier corresponding to the user who uses the article corresponding to the article identifier and generate an article use authentication request including the article identifier and the user identifier.

Exemplarily, in step S1400, the step of determining the user identifier corresponding to the user who uses the article corresponding to the article identifier may include the following steps.

In step S 1431, the user identifier is provided by the user equipment used by the user by means of short range communication.

In step S 1432, the user identifier is acquired by the article by means of short range communication.

In step S1433, the user identifier acquired by the article is determined as the user identifier corresponding to the user who uses the article corresponding to the article identifier.

Alternatively, the article may acquire the user identifier and send an article use authentication request. The article end acquiring the user identifier may include: the user equipment approximates or adheres to the article to perform short range communication with the article and the article acquires the user identifier and determines the user identifier corresponding to the user equipment as the user identifier corresponding to the user who uses the article corresponding to the article identifier.

Alternatively, near field communication may be Bluetooth communication, and after providing the user identifier by the user equipment used by the user by means of short range communication, the method may include the following steps.

In step S1434, the user identifier corresponding to the user who uses the article corresponding to the article identifier is determined, which further includes the following steps.

In step S 1434a, the article identifier is sent by means of Bluetooth broadcast.

In step S 1434b, the article identifier is received by means of monitoring Bluetooth broadcast.

In step S 1434c, the Bluetooth communication state of the user equipment which receives the article identifier is acquired, and the user identifier corresponding to the user equipment meeting a predetermined communication condition is determined as the user identifier corresponding to the user who uses the article.

In step S 1434c, acquiring the Bluetooth communication state of the user equipment which receives the article identifier may be detecting the state whereby the user equipment performs Bluetooth interaction with the article and may also include the state whereby the user equipment receives Bluetooth broadcast.

It should be understood that in this embodiment, the method whereby the user equipment performs Bluetooth interaction with the article is not limited. For example, the user equipment may acquire a Bluetooth communication address corresponding to the article by means of the Bluetooth broadcast of the article based on a Bluetooth communication protocol, establish a Bluetooth long connection with the article to perform interaction communication, or does not establish a long connection but directly perform interaction communication based on the Bluetooth communication address each time and so on.

The article identifier corresponding to the article meeting a predetermined communication condition is determined as the article identifier corresponding to the article used by the user who uses the article according to the acquired Bluetooth communication state of the user equipment which receives the article identifier. For example, an article identifier of an article which has already established a Bluetooth long connection with the user equipment or performs Bluetooth interaction with the user equipment many times, an article identifier of the article used by the user, or an article identifier of Bluetooth broadcast corresponding to the continuously received article identifier may be determined as an article identifier of the article used by the user and so on.

However, in application, the user equipment may monitor a plurality of Bluetooth broadcast signals and receives a plurality of article identifiers, and the article actually used by the user corresponds to which article identifier cannot be determined. Thus, in an example, the predetermined communication condition is that the Bluetooth broadcast corresponding to the article identifier is continuously received within a predetermined period of time and the corresponding Bluetooth interaction has reached a predetermined number of times.

When the user equipment continuously receives the Bluetooth broadcast corresponding to the article identifier and the corresponding Bluetooth interaction has reached the predetermined number of times, it indicates that the article corresponding to the article identifier is closest to the user corresponding to the user equipment and keeps the distance within a predetermined period of time and this user is the user who uses the article. Thus, the user identifier corresponding to the user equipment can be determined as the user identifier corresponding to the user who uses the article accordingly.

In an example, the article use control method may include the following steps.

In step S 1700, a biometric feature of the user who uses the article is acquired, and an article use authentication request is formed with the encoded biometric feature of the user and the article identifier of the article and sent to the server.

In step S1800, the server identifies the user identifier according to the received encoded biometric feature of the user, authenticates whether the user corresponding to the user identifier has a right to use the article and returns a corresponding article use authentication result.

Exemplarily, the user may issue voice information to the article, record a fingerprint in a fingerprint recognition device provided on the article and perform facial/iris recognition by aligning with a facial/iris scanning device and so on provided on the article, and the article end encodes the biometric features such as voice information, fingerprint information, facial information or iris information input by the user so as to take the encoded biometric features of the user and the article identifier of the article as the article use authentication request and send same to the server.

The article use control method according to the embodiment of the present invention may also include: when an event representing that the use of the article is finished occurs, ending the use for the user and performing charging.

In an example, the event representing that the use of the article is finished includes: issuing a message that the use of the article is finished, the article has stopped vibration for a predetermined period of time, the pressure loaded on a part of the article has disappeared for a predetermined period of time, or a part of the article has stopped rotating for a predetermined period of time, the article enters a predetermined region or an article use authentication request is received from another user.

Exemplarily, when the article is a vehicle, the event of ending usage may be that the user may press a button on the vehicle to end the usage or the vehicle senses that the vehicle has stopped vibrating for a period of time, or the pressure loaded on a part of the vehicle such as the seat has disappeared for a predetermined period of time or a part of the article such as the wheel has stopped rotating for a predetermined period of time or the vehicle enters a predetermined area such as a parking area preset by the system or receives an article use authentication request from another user.

For example, when the article is a charging device, the user may press a button on the charging device which represents that the usage of the article is ended and so on.

In addition, after the article is changed from the available state to the disabled state, the article use control method according to the present invention may further include when a predetermined event occurs, setting the article in the disabled state to the available state.

In an example, the predetermined event includes a case that: the article has stopped vibration for a predetermined period of time, the pressure loaded on a part of the article has disappeared for a predetermined period of time, or a part of the article has stopped rotating for a predetermined period of time. Exemplarily, the vehicle senses that the vehicle has stopped vibrating for a period of time, or the pressure loaded on a part of the vehicle such as the seat has disappeared for a predetermined period of time or a part of the article such as the wheel has stopped rotating for a predetermined period of time.

In this example, the predetermined period of time may be set according to engineering experience or experiment simulation.

In an example, one or more chances to acquire the article use authentication result may be provided before the article is changed from the available state to the disabled state, avoiding changing the article to the disabled state when the article use authentication result is not acquired once or the authentication is failed once and thus causing poor user experience.

In particular, the article use control method further comprises: each time the article use authentication result is not acquired or the authentication is failed before the countdown ends, restarting up the timer to count down and triggering the acquisition of the article use authentication result again until the number of times the timer is started up reaches a predetermined threshold and the article use authentication result is still not acquired or the authentication is still failed before the last countdown ends, changing the article from the available state to the disabled state.

The predetermined threshold may be set according to engineering experience or experiment simulation for better user experience.

Alternatively, acquiring the article use authentication result again may be the step of acquiring the article use authentication result described above, which will not be described here anymore.

This embodiment has been described in combination with the figures above. In this embodiment, an article use control method is provided. An article in an available state is provided. Article use authentication is performed on a user who uses the article only when the article is actually in use or when the user requires. For example, active trigger with user participation or passive trigger without user participation may be employed. The article is changed from the available state to a disabled state when an article use authentication result is not acquired or the authentication is failed. Thus, the user can use the article before performing an authentication operation or without waiting for an article use authentication result.

### <Second embodiment

### <Method>

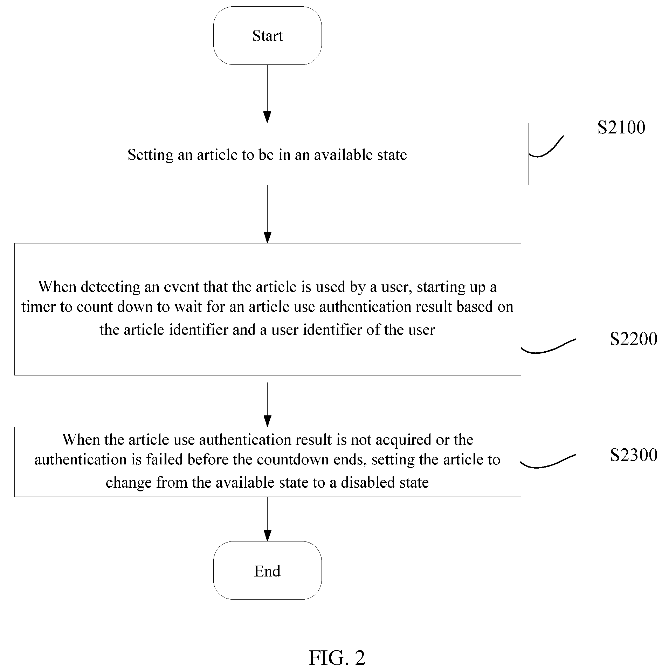

In this embodiment, an article use control method implemented on the article side is provided, which is in particular as shown in Fig. 2 and includes the following steps.

In step S2100, an article is set to be in an available state, wherein the article has a unique article identifier.

In this embodiment, the article may be any article the right-to-use of which can be transferred to and used by a user in a time division or segmentation manner. For example, the article may be a bicycle, an electric vehicle, a moped, an automobile or a charging device, etc.

The article has a unique article identifier which can be an article serial number, sequence number, character string, article code or other article identification information or the like for uniquely identifying the article.

Alternatively, a short range communication device, a storage area and a control unit may also be provided in the article. The storage area stores a corresponding article identifier. The article identifier is read from the storage area under the control of the control unit. The article identifier is sent by means of short range communication so that a user equipment may acquire the article identifier. For example, the article identifier is broadcast through Bluetooth so that the user equipment may receive same through monitoring, or an NFC (Near Field Communication) label carrying the article identifier may be provided on the article so that the user equipment may read this article identifier when being located within the communication range with the NFC label.

Alternatively, the article identifier may be shown on the article. For example, the article serial number, sequence number, character string, article code, article barcode and other article identifiers may be shown at a location on the article which can be easily found by the user.

Providing an article in an available state is in particular to provide an article which can be directly used by a user, for example, providing a vehicle which has already been unlocked or has no lock and can be directly ridden or driven by the user such as a bicycle, an electric vehicle, a moped or an automobile or the like, or providing a charging device which can be directly used by the user and output electricity for charging.

In step S2200, when detecting an event that the article is used by a user, a timer is started up to count down to wait for an article use authentication result based on the article identifier and a user identifier of the user. The article use authentication result is obtained by performing article use authentication based on the article identifier and the user identifier of the user who uses the article corresponding to the article identifier, the user identifier uniquely identifying the user.

Alternatively, the event representing that the article is used by the user includes at least one of the following situations: the article vibrates, the pressure loaded on a part of the article changes, the temperature of the article changes and the article emits an in-use signal.

The above event representing that the article is used by the user has already been described in the first embodiment by taking a vehicle or a charging device as an example. In addition, the above event representing that the article is used by the user may also have corresponding in-use events for different articles, which can be defined in particular according to the article actually used by the user and will not be elaborated here.

Starting up the timer to count down at the article side is not only suitable for article use authentication in a general situation. When an abnormal situation occurs, for example, the article cannot be connected to the user equipment corresponding to the user who uses this article, the server for article use authentication cannot be connected, the user equipment corresponding to the user who uses this article has an abnormal condition and cannot perform communications, or the user who uses this article is an illegal user who has no right to use this article, and thus the article use authentication cannot be triggered actually, the article may change from the available state to the disabled state by means of step S2300 if no article use authentication result is acquired before the countdown is ended.

The user identifier uniquely identifies the user which can be for example a user serial number, identification code, user feature information such as facial data, vocal print data, fingerprint data, iris data and so on uniquely identifying the user.

Alternatively, the user identifier may be allocated to the user by a server which performs registration during the registration of the user and issued to corresponding user equipment for storage therein. When triggering the acquisition of the article use authentication result, the user equipment may be controlled by an application which runs thereon and provides an article use service, acquire its own user identifier and acquire an article identifier of an article used by a corresponding user by means of short range communication for generating an article use authentication request to be sent to the server to acquire a corresponding article use authentication result.

In addition, the countdown duration may be set according to engineering experience and experiment simulation.

In step S2300, when the article use authentication result is not acquired or the authentication is failed before the countdown ends, the article is set to change from the available state to a disabled state.

Alternatively, the disabled state may include a blocked use state and an interfered use state. The blocked use state is a state where the use function of the article is lost. The interfered use state does not make the use function of the article lost, but it is a state where the user is interfered to use the article normally by various means. The disabled state has already been described in detail by way of example in the first embodiment and will not be described here anymore.

In an example, the article use control method also includes: providing the article identifier by means of short range communication or showing the article identifier on the article so that the user equipment acquires the article identifier, and determining a user identifier of the user equipment which acquires the article identifier as the user identifier corresponding to the user who uses the article corresponding to the article identifier, so as to trigger the article use authentication request including the article identifier and the user identifier.

The article has a unique article identifier which can be an article serial number, sequence number, character string, article code or other article identification information or the like for uniquely identifying the article.

The article identifier may be shown on the article. For example, the article serial number, sequence number, character string, article code, article barcode and other article identifiers may be shown at a location on the article which can be easily found by the user.

The short range communication may be Bluetooth communication, NFC (Near Field Communication) communication, ZigBee communication, WiFi communication, UWM (Ultra Wideband) communication, infrared communication, sound wave communication and so on.

In an example, the short range communication is Bluetooth communication. Accordingly, the article identifier may be sent to the user equipment by means of Bluetooth broadcast.

In another example, the short range communication is NFC. Accordingly, the article identifier may be sent to the user equipment by means of NFC.

In an example, the article use control method provided in this embodiment may also include: acquiring the user identifier provided by the user equipment by means of short range communication; determining the user identifier acquired by the article as the user identifier corresponding to the user who uses the article corresponding to the article identifier; generating an article use authentication request including the article identifier and the user identifier; and sending the article use authentication request to a server to trigger the server to authenticate whether the user has a right to use the article according to the user identifier and the article identifier included in the article use authentication request.

Bluetooth communication may also include: broadcasting the Bluetooth communication address of the article per se to trigger the interaction communication with the user equipment to acquire the Bluetooth communication state; and determining the user identifier corresponding to the user equipment of which the corresponding Bluetooth interactions have reached a predetermined number of times as the user identifier corresponding to the user who uses this article.

Broadcasting the Bluetooth communication address of the article per se may enable the user equipment which receives the Bluetooth communication address to establish a long connection with the article based on the Bluetooth communication address or directly send a message to realize interaction communication so as to acquire the Bluetooth communication state which at least contains the state where the user equipment performs Bluetooth interaction with the article.

In application, the article may have implemented interaction communication with a plurality of user equipments, and the user equipment of which the Bluetooth interactions have reached a predetermined number of times may be considered as the user equipment carried or used by the user who uses the article, thus realizing the determination of the user equipment corresponding to the user who actually uses the article from a plurality of user equipments. Accordingly, the user identifier corresponding to the user equipment is determined as the user identifier corresponding to the user who uses this article.

In this example, the predetermined number of times may be set according to engineering experience or experiment simulation.

Whether the user has a right to use the article is authenticated by sending an article use authentication request to trigger the server for performing article use authentication to receive the request and perform corresponding article use authentication. The particular authentication process has already been described in the first embodiment and will not be described here anymore.

After the server performs authentication and obtains an article use authentication result, the article use authentication result may be returned to a corresponding article and/or user equipment. After the article receives the article use authentication result from the server or from the user equipment, the article is maintained in the available state or changed from the available state to the disabled state according to the corresponding article use authentication result.

In an example, the article use control method may include the following steps.

In step S2400, a biometric feature input by the user who uses the article is acquired.

In step S2500, the biometric feature of the user is encoded.

In step S2600, an article use authentication request formed with the encoded biometric feature of the user and the article identifier is sent to a server so that the server identifies the user identifier according to the received encoded biometric feature of the user and authenticates whether the user corresponding to the user identifier has a right to use the article.

Exemplarily, the user may issue voice information to the article, record a fingerprint in a fingerprint recognition device provided on the article and perform facial/iris recognition by aligning with a facial/iris scanning device and so on provided on the article, and the article end encodes the biometric features such as voice information, fingerprint information, facial information or iris information input the user so as to take the encoded biometric features of the user and the article identifier of the article as the article use authentication request and send same to the server.

Exemplarily, the article is a vehicle. Setting the article to change from the available state to the disabled state includes: issuing a signal to control a lock component of the vehicle to contact a wheel of the vehicle so that the vehicle is disabled by means of friction; or issuing a signal to control a front shaft, a middle shaft or a rear shaft of the vehicle to lock; or issuing a signal to control the vehicle to issue an alarm sound or an interference sound, light up an alarm light or prompt an alarm text; or issuing a signal to control a pawl of a rear wheel of the vehicle to be disengaged from a ratchet wheel; or issuing a signal to control a handlebar of the vehicle to be not rotatable.

Exemplarily, the article is a charging device. Setting the article to change from the available state to the disabled state includes: issuing a signal to control the article served as the electronic product to power down; or issuing a signal to control the article to issue an alarm sound or an interference sound, light up an alarm light or prompt an alarm text.

In an example, one or more chances to acquire the article use authentication result may be provided before the article is changed from the available state to the disabled state, avoiding changing the article to the disabled state when the article use authentication result is not acquired once or the authentication is failed once and thus causing poor user experience.

Alternatively, the article use control method further comprises: each time the article use authentication result is not acquired or the authentication is failed before the countdown ends, restarting up the timer to count down and triggering the acquisition of the article use authentication result again until the number of times the timer is started up reaches a predetermined threshold and the article use authentication result is still not acquired or the authentication is still failed before the last countdown ends, changing the article from the available state to the disabled state.

The predetermined threshold may be set according to engineering experience or experiment simulation for better user experience.

In particular, the step of triggering the acquisition of the article use authentication result again may be triggering the user equipment to re-send the article use authentication request by means of short range communication to trigger the server to perform the above step of acquiring an article use authentication result or re-performing the above step of acquiring an article use authentication result at the article side, which will not be described here anymore.

### <Device>

In this embodiment, an article use control device provided on the article side is also provided, comprising: a communication device for implementing communication; a memory for storing instructions; a processor for being controlled by the instructions stored in the memory to operate to implement the article use control method of any one of this embodiment.

Alternatively, the article use control device may be as shown in Fig. 3 and may include a processor 3100, a memory 3200, an interface device 3200, a communication device 3400, a display device 3500, an input device 3600, a speaker 3700, a microphone 3800, etc.

The processor 3100 may be a central processing unit (CPU), a microprocessor (MCU) and so on. The memory 3200 may include an ROM (read-only memory), an RAM (random access memory), a non-volatile memory such as a hard disk and so on. The interface device 3300 may include a USB interface, an earphone interface and so on. The communication device 3400 at least can implement short range communication, such as at least one of Bluetooth communication, NFC communication, UWB communication, ZigBee communication, infrared communication and sound wave communication, and in addition can also perform other wired or wireless communication such as 2G/3G/4G/5G communication or local area network communication and so on. The display device 3500 may be for example a liquid crystal display, a touch display and so on. The input device 3600 may include for example a touch screen, a keyboard, a somatosensory input and so on. The user may input/output voice information through the speaker 3700 and the microphone 3800.

The article use control device 3000 shown in Fig. 3 is merely illustrative and is not intended to limit the present invention and the application and use thereof. Being applied in the embodiment of the present invention, the memory 3200 of the article use control device 3000 is used for storing instructions which are configured to control the processor 3100 to operate to perform the article use control method provided in the embodiment of the present invention. It should be understood by those skilled in the art that although a plurality of devices is shown in Fig. 3 for the article use control device 3000, the present invention may merely involve some of the devices. For example, the article use control device 3000 involves the processor 3100, the memory 3200 and the communication device 3400. The technician may design instructions according to the disclosed solution of the present invention. How the instructions control the processor to operate is well-known in the art and thus will not be described here in detail.

In this embodiment, another article use control device provided on the article side is also provided, comprising: an acquisition unit for acquiring a biometric feature of the user; an encoding unit for encoding the biometric feature; a communication device for implementing communication; a memory for storing instructions; and a processor for being controlled by the instructions stored in the memory to operate to implement the article use control method of any one of this embodiment.

Fig. 4 shows an example of the article use control device. The acquisition unit 4600 may be a microphone for acquiring a voice feature of the user, may be a fingerprint input device for acquiring a fingerprint of the user, and may also be a facial/iris identification device for acquiring a facial/iris feature of the user. Or, the acquisition unit may be a collection of components for acquiring the biometric feature information above. This is not limited in the embodiment of the present invention.

The structure of the encoding unit 4700 matches the acquisition unit 4600 for encoding a corresponding biometric feature.

The other components the same as those in Fig. 3 may be made reference to the description of Fig. 3 and thus will not be described here anymore.

Those skilled in the art shall understand that the article use control device 3000 or 4000 may be realized in various manners. For example, the article use control device 3000 or 4000 may be realized by configuring the processors with instructions. For example, the instructions may be stored in an ROM, and when the device is started up, the instructions are read from the ROM to a programmable device to realize the article use control device. For example, the article use control device may be solidified into a dedicated device (such as ASIC). The article use control device 3000 or 4000 may be separated into independent units or may be realized by combining these independent units. The article use control device 3000 or 4000 may be realized through one of the above implementations or a combination of two or more of the above implementations.

### <Article>

In this embodiment, an article 5000 is provided which at least includes an article use control device 3000 or 4000 provided in this embodiment.

In particular, the article may be a vehicle 41000 as shown in Fig. 5. The article use control device may be an on-board electronic device 31000. It should be understood that the vehicle shown in Fig. 4 is merely illustrative and the vehicle 41000 is not limited to a bicycle, and may also be a moped, an electric bicycle or an electric automobile, an automobile, etc. The location of the on-board electronic device 31000 on the vehicle 41000 is also merely illustrative without limitation.

Alternatively, the article may also include a timer. When an event representing that the article is used by a user occurs, the timer is started up to count down.

Exemplarily, the timer may be individually provided on the article or correspond to the vehicle 41000. The timer may be integrated into the on-board electronic device 31000.

The timer is started up to count down at the article so that if an abnormal situation occurs, for example, the article cannot be connected to the user equipment corresponding to the user who uses this article, the server for article use authentication cannot be connected, the user equipment corresponding to the user who uses this article has an abnormal condition and cannot perform communications, or the user who uses this article is an illegal user who has no right to use this article, and thus the article use authentication cannot be triggered actually, the article may change from the available state to the disabled state.

Alternatively, the article may also include a component for showing the article identifier, such as a label, a sticker and so on. For example, the article identifier is adhered to the article in the form of a sticker printed with a QR code or serial number or digits, or the article may include an NFC label. This component showing the article identifier may be provided on the article in various forms as long as it is convenient for the customer to find. This is not limited in the embodiment of the present invention.

Exemplarily, the article may also include a disable implementation and elimination device which can disable the article when no authentication result is received or an authentication failure result is received.

For example, the article may be a vehicle, and the disable implementation and elimination device may be a lock component which can disable the vehicle in a safe manner, such as disabling the vehicle in a friction manner by contacting the wheel of the vehicle. Other disable methods will not be described here anymore under the premise of ensuring safety.

This embodiment has been described in combination with the figures above. In this embodiment, an article use control method and device and an article are provided. An article in an available state is provided. Article use authentication is performed on a user who uses the article only when the article is actually in use or when the user requires. For example, active trigger with user participation or passive trigger without user participation may be employed. The article is changed from the available state to a disabled state when an article use authentication result is not acquired or the authentication is failed. Thus, the user can use the article before performing an authentication operation or without waiting for an article use authentication result.

### <Third embodiment

### <Method>

In this embodiment, an article use control method implemented on the server side is provided, which is as shown in Fig. 6 and includes the following steps.

In step S6100, an article use authentication request is received from a user or an article, the article use authentication request including an article identifier and a user identifier corresponding to the user who uses the article corresponding to the article identifier, wherein the article identifier uniquely identifies the article, and the user identifier uniquely identifies the user.

Alternatively, the article identifier can be an article serial number, sequence number, character string, article code or other article identification information or the like for uniquely identifying the article. The example where the article acquires and provides the article identifier has already been described in the first embodiment and thus will not be described here anymore.

The user identifier can be a user serial number, identification code, user feature information such as facial data, vocal print data, fingerprint data, iris data or the like which is unique to the user. The example where the user identifier is acquired has already been described in the first embodiment and thus will not be described here anymore.

In step S6200, whether the user has a right to use the article is authenticated according to the user identifier and the article identifier and a corresponding article use authentication result is returned to the user and/or article.

In particular, authenticating the article identifier and the user identifier corresponding to the user who uses the article corresponding to the article identifier to authenticate whether the user has a right to use this article is authenticated may include for example authenticating whether this user is a registered user, whether the user has topped up, whether the user is overdue, whether the user has paid the article deposit, whether the user has bound a payment service and so on, and checking whether the article meets the condition for continuous use at the same time of authentication, for example, whether the electricity is sufficient, whether the article is complete and so on.

When it is authenticated that the user has no right to use this article, authentication failure may be returned so that the article may change from the available state to the disabled state. Instead, if the user has a right to use this article, authentication success will be returned so that the article may be maintained in the available state and the user may continuously use this article.

### <Server>

In this embodiment, a server is also provided, comprising: a memory for storing instructions; a processor for being controlled by the instructions stored in the memory to operate to implement the article use control method provided in this embodiment.

In particular, the server may be for example a blade server, a computer or a computer group consisting of a plurality of computers and may also be a cloud server.

In an example, the server may be as shown in Fig. 7 and may include a processor 7100, a memory 7200, an interface device 7300, a communication device 7400, a display device 7500, an input device 7600, etc. Although the server may also include a speaker, a microphone, etc., these components are irrelevant to the present invention and thus are omitted here. The processor 7100 may be for example a central processing unit (CPU), a microprocessor (MCU) and so on. The memory 7200 may include an ROM (read-only memory), an RAM (random access memory), a non-volatile memory such as a hard disk and so on. The interface device 7300 includes for example a USB interface, a serial interface and so on. The communication device 7400 can perform for example wired or wireless communication. The display device 7500 may be for example a liquid crystal display. The input device 7600 may include for example a touch screen, a keyboard and so on.

The server shown in Fig. 7 is merely illustrative and is not intended to limit the present invention and the application and use thereof. Being applied in the embodiment of the present invention, the memory 7200 of the server 7000 is used for storing instructions which are configured to control the processor 7100 to operate to perform the article use control method provided in the embodiment of the present invention. It should be understood by those skilled in the art that although a plurality of devices is shown in Fig. 7 for the server 7000, the present invention may merely involve some of the devices. For example, the server 7000 merely involves the processor 7100 and the memory 7200. The technician may design instructions according to the disclosed solution of the present invention. How the instructions control the processor to operate is well-known in the art and thus will not be described here in detail.

Those skilled in the art shall understand that the server 7000 may be realized in various manners. For example, the server 7000 may be realized by configuring the processors with instructions. For example, the instructions may be stored in an ROM, and when the device is started up, the instructions are read from the ROM to a programmable device to realize the article use control device. For example, the article use control device may be solidified into a dedicated device (such as ASIC). The server 7000 may be separated into independent units or may be realized by combining these independent units. The server 7000 may be realized through one of the above implementations or a combination of two or more of the above implementations.

This embodiment has been described in combination with the figures above. In this embodiment, an article use control method and a server are provided. An article in an available state is provided. Article use authentication is performed on a user who uses the article only when the article is actually in use or when the user requires. For example, active trigger with user participation or passive trigger without user participation may be employed. The article is changed from the available state to a disabled state when an article use authentication result is not acquired or the authentication is failed. Thus, the user can use the article before performing an authentication operation or without waiting for an article use authentication result.

### <Fourth embodiment

### <Method>

In this embodiment, an article use control method implemented on the user equipment side is provided, which is as shown in Fig. 8 and includes the following steps.

In step S8100, an article identifier corresponding to an article used by a user is acquired and determined to trigger the acquisition of an article use authentication result.

The article identifier uniquely identifies the article, the article use authentication result is obtained by performing article use authentication based on the article identifier and the user identifier of the user who uses the article corresponding to the article identifier, and the user identifier uniquely identifies the user.

In this embodiment, the article may be any article the right-to-use of which can be transferred to and used by a user in a time division or segmentation manner. For example, the article may be a bicycle, an electric vehicle, a moped, an automobile or a charging device, etc.

The article identifier uniquely identifies the article and can be an article serial number, sequence number, character string, article code or other article identification information or the like for uniquely identifying the article. The example where the article acquires and provides the article identifier has already been described in the first embodiment and thus will not be described here anymore.

The user identifier uniquely identifies the user which can be a user serial number, identification code, user feature information such as facial data, vocal print data, fingerprint data, iris data or the like which is unique to the user. The example where the user identifier is acquired has already been described in the first embodiment and thus will not be described here anymore.

The user equipment may be a device used or carried by the user, for example a smart terminal such as a mobile phone, a palm computer, a tablet computer, etc. or a wearable smart device such as a smart watch, a smart loop, a smart jewelry, etc.

The user equipment may have an image identification device such as a camera so as to be triggered by the user. For example, an article identifier provided on the article is shot by an interface of an application installed for providing an article use service. For example, the article identifier is acquired and determined by identifying a QR code. Or, the user may input the article identifier shown on the article on the user equipment, so that the user equipment acquires and determines the article identifier corresponding to the article used by the user to trigger the acquisition of an article use authentication result.

Alternatively, the user equipment may have a short range communication function. The short range communication function may be opened when an application scenario is triggered in real time. For example, the short range communication function is opened by means of the prompt of an interface of an application installed for providing an article use service, or the short range communication function is kept opened.

In the case of opening the short range communication function, information may be received by means of short range communication. When at least one article identifier is received and an article identifier corresponding to the article used by the user is determined, the acquisition of an article use authentication result may be triggered.

In an example, the short range communication is Bluetooth communication. Accordingly, the article use control method provided in this embodiment may also in particular include: when at least one article identifier is received by monitoring Bluetooth broadcast, acquiring the Bluetooth communication state of the article corresponding to the article identifier, and determining an article meeting a predetermined communication condition as the article used by the user to determine the corresponding article identifier.

Alternatively, acquiring the Bluetooth communication state of the article corresponding to the article identifier may be detecting the state whereby the user equipment performs Bluetooth interaction with the article and may also include the state whereby the user equipment receives Bluetooth broadcast corresponding to the article.

It should be understood that in this embodiment, the method whereby the user equipment performs Bluetooth interaction with the article is not limited. For example, the user equipment may acquire a Bluetooth communication address corresponding to the article by means of the Bluetooth broadcast of the article based on a Bluetooth communication protocol, establish a Bluetooth long connection with the article to perform interaction communication, or does not establish a long connection but directly perform interaction communication based on the Bluetooth communication address each time and so on.

An article meeting a predetermined communication condition is determined as the article used by the user to determine the corresponding article identifier by acquiring the Bluetooth communication state of the article corresponding to the article identifier. For example, an article which has already established a Bluetooth long connection with the user equipment or performs Bluetooth interaction with the user equipment many times may be determined as the article used by the user to determine the corresponding article identifier. Or, an article which continuously receives Bluetooth broadcast may be determined as the article used by the user to determine the corresponding article identifier and so on.

However, in application, the user equipment may monitor a plurality of Bluetooth broadcast signals and receives a plurality of article identifiers, and the article actually used by the user corresponds to which article identifier cannot be determined. Thus, in an example, the predetermined communication condition is that the Bluetooth broadcast corresponding to the article identifier is continuously received within a predetermined period of time and the corresponding Bluetooth interaction has reached a predetermined number of times.

When the user equipment continuously receives the Bluetooth broadcast corresponding to the article identifier and the corresponding Bluetooth interaction has reached the predetermined number of times, it indicates that the article corresponding to the article identifier is closest to the user corresponding to the user equipment and keeps the distance within a predetermined period of time and this article is the article used by the user. Thus, the article identifier can be determined accordingly.

In an example, the short range communication is NFC. Acquiring and determining the article identifier corresponding to the article used by the user to trigger the acquisition of the article use authentication result include: the user equipment approximates or adheres to the article to perform short range communication with the article so as to acquire the article identifier and determine the user identifier of the user equipment which acquires the article identifier as the user identifier corresponding to the user who uses the article corresponding to the article identifier and generate an article use authentication request including the article identifier and the user identifier.

In an example, in the article use control method provided in this embodiment, determining the article identifier corresponding to the article used by the user may include: acquiring, by means of short range communication, the article identifier provided by the article by means of short range communication or acquiring the article identifier shown on the article, and determining the acquired article identifier as the article identifier corresponding to the article used by the user.

Accordingly, the article use control method provided in this embodiment also includes steps S8201 and S8202 as shown in Fig. 8.

In step S8201, an article use authentication request including the article identifier and the user identifier is generated.

In step S8202, the article use authentication request is sent to a server to trigger the server to authenticate whether the user has a right to use the article according to the user identifier and the article identifier included in the article use authentication request.

Alternatively, sending the user identifier to the article corresponding to the article identifier by means of short range communication may trigger the article to generate an article use authentication request according to the user identifier and send same to the server to trigger the acquisition of an article use authentication result, which is in particular as described in the second embodiment and will not be described here anymore.

The particular method of authenticating whether the user has a right to use the article according to the user identifier and the article identifier and returning a corresponding article use authentication result has been described in the first embodiment and the second embodiment, which will not be described here anymore.

In this embodiment, the article use authentication result may be returned to the article and may also be returned to the user equipment. It should be understood that when the article use authentication result is returned to the user equipment, the article use authentication result may be provided to the article by means of short range communication so that the article operates according to the corresponding article use authentication result.

### <User equipment>

In this embodiment, a user equipment is also provided, including a communication device, a memory and a processor.

The communication device is configured for implementing communication.

The memory is configured for storing instructions.

The processor is configured for being controlled by the instructions stored in the memory to operate to implement the article use control method of any one of this embodiment.

The user equipment may be a smart terminal such as a mobile phone, a palm computer, a tablet computer, etc. or a wearable smart device such as a smart watch, a smart loop, a smart jewelry, etc.

In an example, the user equipment may be as shown in Fig. 9 and may include a processor 6100, a memory 6200, an interface device 6300, a communication device 6400, a display device 6500, an input device 6600, a speaker 6700, a microphone 6800, etc.

The processor 6100 may be a central processing unit (CPU), a microprocessor (MCU) and so on. The memory 6200 may include an ROM (read-only memory), an RAM (random access memory), a non-volatile memory such as a hard disk and so on. The interface device 6300 may include a USB interface, an earphone interface and so on. The communication device 6400 at least can implement short range communication, such as at least one of Bluetooth communication, NFC communication, UWB communication, ZigBee communication, infrared communication and sound wave communication, and in addition can also perform other wired or wireless communication such as 2G/3G/4G/5G communication or local area network communication and so on. The display device 6500 may be for example a liquid crystal display, a touch display and so on. The input device 6600 may include for example a touch screen, a keyboard, a somatosensory input and so on. The user may input/output voice information through the speaker 6700 and the microphone 6800.

The user equipment 6000 shown in Fig. 9 is merely illustrative and is not intended to limit the present invention and the application and use thereof. Being applied in the embodiment of the present invention, the memory 6200 of the user equipment 6000 is used for storing instructions which are configured to control the processor 6100 to operate to perform the article use control method provided in the embodiment of the present invention. It should be understood by those skilled in the art that although a plurality of devices is shown in Fig. 9 for the user equipment 6000, the present invention may merely involve some of the devices. For example, the user equipment 6000 involves the processor 6100, the memory 6200 and the communication device 6400. The technician may design instructions according to the disclosed solution of the present invention. How the instructions control the processor to operate is well-known in the art and thus will not be described here in detail.

Those skilled in the art shall understand that the user equipment 6000 may be realized in various manners. For example, the user equipment 6000 may be realized by configuring the processors with instructions. For example, the instructions may be stored in an ROM, and when the device is started up, the instructions are read from the ROM to a programmable device to realize the article use control device. For example, the article use control device may be solidified into a dedicated device (such as ASIC). The user equipment 6000 may be separated into independent units or may be realized by combining these independent units. The user equipment 6000 may be realized through one of the above implementations or a combination of two or more of the above implementations.

Alternatively, a user equipment is also provided which may also include an information acquisition device such as a camera for acquiring an article identifier of an article.

This embodiment has been described in combination with the figures above. In this embodiment, an article use control method and a user equipment are provided. An article identifier corresponding to an article used by a user is acquired and determined to trigger the acquisition of an article use authentication result so that the user can use the article before performing an authentication operation. Moreover, during the use of the article by the user, article use authentication is completed in a user-unperceivable manner. The user experience is improved.

### <Fifth embodiment

In this embodiment, an article use control system is provided, including an article provided in the second embodiment, a server provided in the third embodiment and a user equipment provided in the fourth embodiment to implement the article use control method provided in the present invention, as shown in Fig. 11, which will not be described here anymore.

As shown in Fig. 10, the article use control system 9000 includes an article 5000 shown in Fig. 4, a user equipment 6000 shown in Fig. 9 and a server 7000 shown in Fig. 7.

The article 5000 communicates with the user equipment 6000 by means of short range communication. Or, the user equipment 6000 directly reads the article identifier on the article 5000. The article 5000 communicates with the server 7000 and the user equipment 6000 communicates with the server 7000 through a network 9100 respectively. The network 9100 may be a wireless or wired communication network.

Aspect 1, there is provided an article use control method, comprising: providing an article in an available state, the article having a unique article identifier; when detecting an event that the article is used by a user, starting up a timer to count down to wait for an article use authentication result based on the article identifier and a user identifier of the user who uses the article, the user identifier uniquely identifying the user; and when the article use authentication result is not acquired or the authentication is failed before the countdown ends, changing the article from the available state to a disabled state.

Aspect 2, the article use control method of Aspect 1 further comprises: each time the article use authentication result is not acquired or the authentication is failed before the countdown ends, restarting up the timer to count down until the number of times the timer is started up reaches a predetermined threshold and the article use authentication result is still not acquired or the authentication is still failed before the last countdown ends, changing the article from the available state to the disabled state.

Aspect 3, in the article use control method of Aspect 1 or 2, the event representing that the article is used by the user includes at least one of the following situations: the article vibrates, the pressure loaded on a part of the article changes, the temperature of the article changes and the article emits an in-use signal.

Aspect 4, the article use control method of any one of Aspects 1 to 3 further comprises: determining the user identifier corresponding to the user who uses the article corresponding to the article identifier; generating an article use authentication request including the article identifier and the user identifier; and sending the article use authentication request to a server to trigger the server to authenticate whether the user has a right to use the article according to the user identifier and the article identifier included in the article use authentication request and returning a corresponding article use authentication result.

Aspect 5, in the article use control method of Aspect 4, the step of determining the user identifier corresponding to the user who uses the article corresponding to the article identifier comprises: acquiring the article identifier shown on the article by a user equipment used by the user; and determining a user identifier of the user equipment which acquires the article identifier as the user identifier corresponding to the user who uses the article corresponding to the article identifier; or, providing the article identifier by the article by means of short range communication; acquiring the article identifier by a user equipment used by the user by means of short range communication; and determining a user identifier of the user equipment which acquires the article identifier as the user identifier corresponding to the user who uses the article corresponding to the article identifier; or, providing the user identifier by a user equipment used by the user by means of short range communication; acquiring the user identifier by the article by means of short range communication; and determining the user identifier acquired by the article as the user identifier corresponding to the user who uses the article corresponding to the article identifier.

Aspect 6, the article use control method of any one of Aspects 1 to 5 further comprises: acquiring a biometric feature of the user who uses the article, forming an article use authentication request with the encoded biometric feature of the user and the article identifier of the article and sending same to the server; and identifying by the server the user identifier according to the received encoded biometric feature of the user, authenticating by the server whether the user corresponding to the user identifier has a right to use the article and returning by the server a corresponding article use authentication result.

Aspect 7, in the article use control method of any one of Aspects 1 to 6, the article use authentication result includes authentication success and authentication failure, the authentication failure including a case that the user is a non-registered user, the account corresponding to the user has insufficient balance, the account corresponding to the user is overdue, or the account corresponding to the user does not pay a deposit.

Aspect 8, the article use control method of any one of Aspects 1 to 7 further comprises: when an event representing that the use of the article is finished occurs, ending the use for the user and performing charging.

Aspect 9, in the article use control method of Aspect 8, the event representing that the use of the article is finished includes: issuing a message that the use of the article is finished, the article has stopped vibration for a predetermined period of time, the pressure loaded on a part of the article has disappeared for a predetermined period of time, or a part of the article has stopped rotating for a predetermined period of time, the article enters a predetermined region or an article use authentication request is received from another user.

Aspect 10, the article use control method of any one of Aspects 1 to 9 further comprises: when a predetermined event occurs, setting the article in the disabled state to the available state.

Aspect 11, in the article use control method of Aspect 10, the predetermined event includes a case that: the article has stopped vibration for a predetermined period of time, the pressure loaded on a part of the article has disappeared for a predetermined period of time, or a part of the article has stopped rotating for a predetermined period of time.

Aspect 12, there is provided an article use control method implemented on the article side, comprising: setting an article to be in an available state, the article having a unique article identifier; when detecting an event that the article is used by a user, starting up a timer to count down to wait for an article use authentication result based on the article identifier and a user identifier of the user; wherein the article use authentication result is obtained by performing article use authentication based on the article identifier and the user identifier of the user who uses the article corresponding to the article identifier, the user identifier uniquely identifying the user; and when the article use authentication result is not acquired or the authentication is failed before the countdown ends, setting the article to change from the available state to a disabled state.

Aspect 13, the article use control method of Aspect 12 further comprises: each time the article use authentication result is not acquired or the authentication is failed before the countdown ends, restarting up the timer to count down until the number of times the timer is started up reaches a predetermined threshold and the article use authentication result is still not acquired or the authentication is still failed before the last countdown ends, setting the article from the available state to the disabled state.

Aspect 14, the article use control method of Aspect 12 or 13 further comprises: providing the article identifier by means of short range communication or showing the article identifier on the article so that the user equipment acquires the article identifier, and determining a user identifier of the user equipment which acquires the article identifier as the user identifier corresponding to the user who uses the article corresponding to the article identifier, so as to trigger the article use authentication request including the article identifier and the user identifier.

Aspect 15, the article use control method of any one of Aspects 12 to 14 further comprises: acquiring, by means of short range communication, the user identifier provided by the user equipment by means of short range communication; determining the user identifier acquired by the article as the user identifier corresponding to the user who uses the article corresponding to the article identifier; generating an article use authentication request including the article identifier and the user identifier; and sending the article use authentication request to a server to trigger the server to authenticate whether the user has a right to use the article according to the user identifier and the article identifier included in the article use authentication request.

Aspect 16, the article use control method of any one of Aspects 12 to 15 further comprises: acquiring a biometric feature input by the user who uses the article; encoding the biometric feature of the user; and sending an article use authentication request formed with the encoded biometric feature of the user and the article identifier to a server so that the server identifies the user identifier according to the received encoded biometric feature of the user and authenticates whether the user corresponding to the user identifier has a right to use the article.

Aspect 17, in the article use control method of any one of Aspects 12 to 16, the event representing that the article is used by the user includes at least one of the following situations: the article vibrates, the pressure loaded on a part of the article changes, the temperature of the article changes and the article emits an in-use signal.

Aspect 18, in the article use control method of any one of Aspects 12 to 17, the article is a vehicle, and the step of setting the article from the available state to the disabled state includes: issuing a signal to control a lock component of the vehicle to contact a wheel of the vehicle so that the vehicle is disabled by means of friction; issuing a signal to control a front shaft, a middle shaft or a rear shaft of the vehicle to lock; or issuing a signal to control the vehicle to issue an alarm sound or an interference sound, light up an alarm light or prompt an alarm text; or issuing a signal to control a pawl of a rear wheel of the vehicle to be disengaged from a ratchet wheel; or issuing a signal to control a handlebar of the vehicle to be not rotatable.

Aspect 19, in the article use control method of any one of Aspects 12 to 18, the step of setting the article from the available state to the disabled state includes: issuing a control to control the article as an electric product to power down; or issuing a signal to control the article to issue an alarm sound or an interference sound, light up an alarm light or prompt an alarm text.

Aspect 20, there is provided an article use control method implemented on the server side and comprising: receiving an article use authentication request from a user or an article, the article use authentication request including an article identifier and a user identifier corresponding to the user who uses the article corresponding to the article identifier, wherein the article identifier uniquely identifies the article, and the user identifier uniquely identifies the user; and authenticating whether the user has a right to use the article according to the user identifier and the article identifier and returning a corresponding article use authentication result to the user and/or article.

Aspect 21, there is provided an article use control method implemented on the user equipment side and comprising: acquiring and determining an article identifier corresponding to an article used by a user to trigger the acquisition of an article use authentication result, wherein the article identifier uniquely identifies the article, the article use authentication result is obtained by performing article use authentication based on the article identifier and the user identifier of the user who uses the article corresponding to the article identifier, and the user identifier uniquely identifies the user.

Aspect 22, in the article use control method of Aspect 21, the step of acquiring and determining the article identifier corresponding to the article used by the user includes: acquiring the article identifier provided by the article by means of short range communication or acquiring the article identifier shown on the article, and determining the acquired article identifier as the article identifier corresponding to the article used by the user; the method further includes: generating an article use authentication request including the article identifier and the user identifier; and sending the article use authentication request to a server to trigger the server to authenticate whether the user has a right to use the article according to the user identifier and the article identifier included in the article use authentication request.

Aspect 23, there is provided an article use control device provided on the article side and comprising: a communication device for implementing communication; a memory for storing instructions; a processor for being controlled by the instructions stored in the memory to operate to implement the article use control method of any one of Aspects 12 to 19.

Aspect 24, there is provided an article use control device provided on the article side and comprising: an acquisition unit for acquiring a biometric feature of the user; an encoding unit for encoding the biometric feature; a communication device for implementing communication; a memory for storing instructions; a processor for being controlled by the instructions stored in the memory to operate to implement the article use control method of any one of Aspects 12, 13 and 16 to 19.

Aspect 25, there is provided an article, comprising: an article use control device of any one of Aspect 23 or 24.

Aspect 26, in the article of Aspect 25, the article is a vehicle, and the article use control device is an on-board electronic device.

Aspect 27, there is provided a user equipment, comprising: a communication device for implementing communication; a memory for storing instructions; a processor for being controlled by the instructions stored in the memory to operate to implement the article use control method of any one of Aspects 21 to 22.

Aspect 28, in the user equipment of aspect 27, the user equipment is a mobile phone or a wearable electronic device.

Aspect 29, there is provided a server, comprising: a memory for storing instructions; a processor for being controlled by the instructions stored in the memory to operate to implement the article use control method of Aspect 20.

Aspect 30, there is provided an article use control system, comprising: an article of Aspect 25 or 26; a user equipment of Aspect 27 or 28; and a server of Aspect 29.

Those skilled in the art shall well know that, as electronic and information technologies such as large scale integrated circuit technologies develop and the trend that software are realized by hardware advances, it becomes difficult to distinguish software and hardware of computer systems, since any operation or execution of any instruction can be realized by software or hardware. Whether to realize a function of a machine using a software or hardware solution may depend on non-technical factors such as prices, speeds, reliability, storage capacity, change period etc. Therefore, a more direct and clear description manner of a technical solution to a person skilled in the fields of electronic and information technologies may be descriptions of the operations of the solution. When knowing the operations to be performed, those skilled in the art may directly design desired products based on considerations of the non-technical factors. The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions. It is well-known to a person skilled in the art that the implementations of using hardware, using software or using the combination of software and hardware can be equivalent with each other.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein. The scope of the present invention is defined by the attached claims.

## Claims

1. An article use control method, comprising:
providing an article in an available state, the article having a unique article identifier;
when detecting an event that the article is used by a user, starting up a timer to count down to wait for an article use authentication result based on the article identifier and a user identifier of the user who uses the article, the user identifier uniquely identifying the user; and
when the article use authentication result is not acquired or the authentication is failed before the countdown ends, changing the article from the available state to a disabled state.

2. The article use control method of claim 1, further comprising: each time the article use authentication result is not acquired or the authentication is failed before the countdown ends, restarting up the timer to count down until the number of times the timer is started up reaches a predetermined threshold and the article use authentication result is still not acquired or the authentication is still failed before the last countdown ends, changing the article from the available state to the disabled state.

3. The article use control method of claim 1 or 2, wherein the event representing that the article is used by the user includes at least one of the following situations: the article vibrates, the pressure loaded on a part of the article changes, the temperature of the article changes and the article emits an in-use signal.

4. The article use control method of any one of claims 1 to 3, further comprising:
determining the user identifier corresponding to the user who uses the article corresponding to the article identifier;
generating an article use authentication request including the article identifier and the user identifier; and
sending the article use authentication request to a server to trigger the server to authenticate whether the user has a right to use the article according to the user identifier and the article identifier included in the article use authentication request and returning a corresponding article use authentication result.

5. The article use control method of claim 4, wherein the step of determining the user identifier corresponding to the user who uses the article corresponding to the article identifier comprises:
acquiring the article identifier shown on the article by a user equipment used by the user; and
determining a user identifier of the user equipment which acquires the article identifier as the user identifier corresponding to the user who uses the article corresponding to the article identifier;
or,
providing the article identifier by the article by means of short range communication;
acquiring the article identifier by a user equipment used by the user by means of short range communication; and
determining a user identifier of the user equipment which acquires the article identifier as the user identifier corresponding to the user who uses the article corresponding to the article identifier;
or,
providing the user identifier by a user equipment used by the user by means of short range communication;
acquiring the user identifier by the article by means of short range communication; and
determining the user identifier acquired by the article as the user identifier corresponding to the user who uses the article corresponding to the article identifier.

6. The article use control method of any one of claims 1 to 5, further comprising:
acquiring a biometric feature of the user who uses the article, forming an article use authentication request with the encoded biometric feature of the user and the article identifier of the article and sending same to the server; and
identifying by the server the user identifier according to the received encoded biometric feature of the user, authenticating by the server whether the user corresponding to the user identifier has a right to use the article and returning by the server a corresponding article use authentication result.

7. The article use control method of any one of claims 1 to 6, wherein the article use authentication result includes authentication success and authentication failure, the authentication failure including a case that the user is a non-registered user, the account corresponding to the user has insufficient balance, the account corresponding to the user is overdue, or the account corresponding to the user does not pay a deposit.

8. The article use control method of any one of claims 1 to 7, further comprising:
when an event representing that the use of the article is finished occurs, ending the use for the user and performing charging.

9. The article use control method of any one of claims 1 to 8, further comprising:
when a predetermined event occurs, setting the article in the disabled state to the available state.

10. An article use control method implemented on the article side, comprising:
setting an article to be in an available state, the article having a unique article identifier;
when detecting an event that the article is used by a user, starting up a timer to count down to wait for an article use authentication result based on the article identifier and a user identifier of the user;
wherein the article use authentication result is obtained by performing article use authentication based on the article identifier and the user identifier of the user who uses the article corresponding to the article identifier, the user identifier uniquely identifying the user; and
when the article use authentication result is not acquired or the authentication is failed before the countdown ends, setting the article to change from the available state to a disabled state.

11. The article use control method of claim 10, further comprising:
acquiring a biometric feature input by the user who uses the article;
encoding the biometric feature of the user; and
sending an article use authentication request formed with the encoded biometric feature of the user and the article identifier to a server so that the server identifies the user identifier according to the received encoded biometric feature of the user and authenticates whether the user corresponding to the user identifier has a right to use the article.

12. The article use control method of claim 10 or 11, wherein the article is a vehicle, and the step of setting the article from the available state to the disabled state includes:
issuing a signal to control a lock component of the vehicle to contact a wheel of the vehicle so that the vehicle is disabled by means of friction;
issuing a signal to control a front shaft, a middle shaft or a rear shaft of the vehicle to lock; or
issuing a signal to control the vehicle to issue an alarm sound or an interference sound, light up an alarm light or prompt an alarm text; or
issuing a signal to control a pawl of a rear wheel of the vehicle to be disengaged from a ratchet wheel; or
issuing a signal to control a handlebar of the vehicle to be not rotatable.

13. An article use control method implemented on a user equipment side, comprising:
acquiring and determining an article identifier corresponding to an article used by a user to trigger the acquisition of an article use authentication result,
wherein the article identifier uniquely identifies the article, the article use authentication result is obtained by performing article use authentication based on the article identifier and the user identifier of the user who uses the article corresponding to the article identifier, and the user identifier uniquely identifies the user.

14. An article, comprising an article use control device including:
a communication device for implementing communication;
a memory for storing instructions;
a processor for being controlled by the instructions stored in the memory to operate to implement the article use control method of claim 12 or 13;
or including:
a acquisition unit for acquiring a biometric feature of the user;
an encoding unit for encoding the biometric feature;
a communication device for implementing communication;
a memory for storing instructions; and
a processor for being controlled by the instructions stored in the memory to operate to implement the article use control method of claim 12 or 13.

15. An article use control system, comprising:
an article of claim 14;
a user equipment, including:
a communication device for implementing communication;
a memory for storing instructions; and
a processor for being controlled by the instructions stored in the memory to operate to implement the article use control method of claim 13; and
a server, including:
a memory for storing instructions; and
a processor for being controlled by the instructions stored in the memory to operate to implement the article use control method of claim 1.
